# EUROPÄISCHE PATENTSCHRIFT

(11) **EP 1 064 712 B1**
(45) Veröffentlichungstag und Bekanntmachung des Hinweises auf die Patenterteilung: **18.08.2004**
(21) Anmeldenummer: 99917819.7
(22) Anmeldetag: 16.03.1999
(51) Int. Cl.: H02K 21/12, H02K 41/025

(54) **MEHRSTRÄNGIGE TRANSVERSALFLUSSMASCHINE**
MULTI-PHASE TRANSVERSE FLUX MACHINE
MOTEUR A FLUX TRANSVERSAL POLYPHASE

(30) Priorität: 19.03.1998 DE 19813155
(43) Veröffentlichungstag der Anmeldung: 03.01.2001
(73) Patentinhaber: Bombardier Transportation GmbH, 13627 Berlin (DE)
(72) Erfinder: SCHÄFER, Uwe, D-12047 Berlin (DE); NEUDORFER, Harald, A-2514 Traiskirchen (AT)
(74) Vertreter: COHAUSZ & FLORACK
(86) Internationale Anmeldenummer: PCT/EP1999/001711
(87) Internationale Veröffentlichungsnummer: WO 1999/048190

(56) Entgegenhaltungen:
- DE-A- 3 122 695
- DE-A- 19 614 862
- US-A- 4 255 680
- LANSEN ET AL.: "Analysis of Competing Topologies of Linear Induction Machines for High Speed Material Transport Systems" 1993 IEEE INDUSTRY APPLICATIONS CONFERENCE 28TH IAS ANNUAL MEETING, Bd. 1, 3. - 8. August 1993, Seiten 274-281, XP000427451 Toronto, Canada

## Beschreibung

Die Erfindung betrifft eine Transversalflußmaschine nach dem Oberbegriff des Anspruchs 1.

Eine derartige Maschine ist in der DE 196 14 862 A1 beschrieben. Diese besteht aus einem feststehenden Ständer und einem rotierenden Läufer, welcher Permanentmagnete aufweist, die auf ringförmigen Weicheisenrückschlüssen befestigt sind. Die Maschine ist mehrsträngig ausgebildet, wobei jeder Strang als eine einphasige Maschine angesehen werden kann. Durch Aneinanderreihung mehrerer Stränge kann eine Mehrphasigkeit erreicht werden, wobei jedoch jeder Strang magnetisch und elektrisch von den anderen Strängen isoliert ist. Derartige Transversalflußmaschinen sind durch die Permanentmagnete jedoch in der Herstellung kostenaufwendig und haben einen relativ geringen Leistungsfaktor.

Es ist die Aufgabe der vorliegende Erfindung, eine mehrsträngige Transversalflußmaschine mit einem Ständer mit im wesentlichen U- und I-förmigen Jochen aus weichmagnetischem Material und jeweils einer in diesen einen Magnetfluß erzeugenden Ständerwicklung für jeden Strang sowie einem Läufer mit magnetischem Rückschluß, wobei die Stränge im Bereich des Ständers magnetisch voneinander getrennt sind, zu schaffen, die kostengünstig herstellbar ist und einen relativ hohen Wirkungsgrad hat.

Diese Aufgabe wird erfindungsgemäß gelöst durch die im kennzeichnenden Teil des. Anspruchs 1 angegebenen Merkmale. Vorteilhafte Weiterbildungen der erfindungsgemäßen Transversalflußmaschine ergeben sich aus den Unteransprüchen.

Dadurch, daß der Läufer in jedem einem der Stränge zugeordneten Bereich elektrisch leitendes Material enthält und das elektrisch leitende Material mindestens zweier Stränge so in dem Läufer angeordnet und miteinander verbunden ist, daß bei durch die Ständerwicklungen dieser Stränge fließendem Wechselstrom ein ein Anlaufdrehmoment für den Läufer erzeugender Strom in dem elektrisch leitenden Material induziert wird, kann auch ohne die Permanentmagnete ein Anlaufdrehmoment erhalten werden. Während bei der bekannten Transversalflußmaschine die Einphasigkeit der getrennt wirksamen Stränge bei Verzicht auf die Permanentmagnete kein Anlaufdrehmoment erzeugt werden kann, arbeitet die erfindungsgemäße Maschine in der Weise, daß die einzelnen Stränge zwar auch magnetisch unabhängig voneinander sind, daß sie aber elektrisch im Läufer als Drehfeld-Maschine zusammenwirken. Diese Maschine hat daher das Verhalten einer Transversalfluß-Asynchronmaschine. Durch die Verwendung eines elektrisch leitenden Materials mit geringem spezifischen Widerstand sind die elektrischen Verluste im Läufer relativ gering, so daß ein zufriedenstellender Wirkungsgrad erzielt werden kann.

Das Anlaufdrehmoment kann vorzugsweise dadurch erhalten werden, daß die Ständerwicklungen der einzelnen Stränge mit in der Phase gegeneinander verschobenen Strömen beaufschlagbar sind. Erfindungsgemäß sind die elektrisch miteinander verbundenen Läuferpole der einzelnen Stränge und/oder die den elektrisch miteinander verbundenen Läuferpolen der einzelnen Stränge zugeordneten Ständerpole geometrisch gegeneinander versetzt. Bei beispielsweise m Strängen können die Stränge zweckmäßig um ein m-tel einer doppelten Polteilung gegeneinander versetzt sein. Die in den Strängen fließenden Ströme und Spannungen sollten dann auch um den entsprechenden Winkel zeitlich gegeneinander versetzt sein.

Wenn das im Läufer enthaltene elektrisch leitende Material einen Läuferkäfig mit zwei stirnseitigen Kurzschlußringen bildet, entspricht dieser dem üblichen Läuferanker einer Asynchronmaschine.

Wenn die Maschine mit einer Draht-Läuferwicklung ausgebildet ist, dann kann diese anstatt mit einem Kurzschlußring mit einem Schleifring verbunden werden, über den von außen eine elektrische Leistung zuführbar ist. Die Maschine zeigt dann ein ähnliches Betriebsverhalten wie eine bekannte Asynchronmaschine mit Schleifringläufer. Werden die Schleifringe mit Gleichstrom gespeist, erhält man eine Maschine mit dem Verhalten éiner elektrisch erregten Synchronmaschine.

Die Maschine kann als einseitige oder auch als zweiseitige Transversalflußmaschine ausgebildet sein, das heißt der Ständer befindet sich entweder nur auf einer Seite oder auf beiden Seiten des Läufers.

Weiterhin kann die Maschine in der Weise ausgestaltet sein, daß sie entweder einen rotierenden Läufer oder einen linear bewegten Läufer aufweist.

Die Erfindung wird im folgenden anhand von in den Figuren dargestellten Ausführungsbeispiele näher erläutert. Es zeigen:
- Fig. 1: einen senkrechten und einen horizontalend Schnitt durch einen aus drei Strängen bestehenden Transversalflußmotor nach einem ersten Ausführungsbeispiel der Erfindung,
- Fig. 2: einen senkrechten und einen horizontalen Schnitt durch einen aus drei Strängen bestehenden Transversalflußmotor nach einem zweiten Ausführungsbeispiel der Erfindung, und
- Fig. 3: ein Beispiel für die Schichtung der Bleche der magnetischen Teile des Ständers und des Läufers.

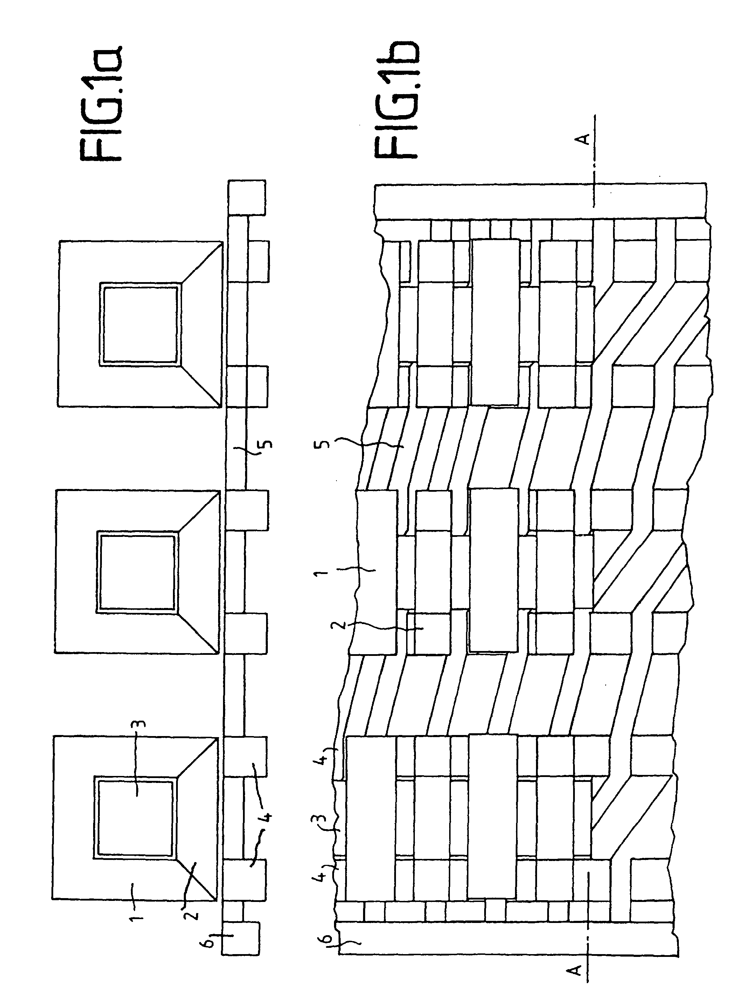

Fig. 1 zeigt eine linear gezeichnete dreiphasige Anordnung eines Transversalflußmotors. Der senkrechte Schnitt gemäß Fig. 1a ist in Bewegungsrichtung gesehen, das heißt der Läufer bewegt sich senkrecht zur Zeichenebene. Der horizontale Schnitt in Fig. 1b ist in Richtung tangential zur Bewegung des Läufers geführt. Oberhalb der Linie A-A in Fig. 1b erfolgt die Ansicht von der Ständer-Außenseite auf die Maschine. Unterhalb der Linie A-A wird direkt auf die Ebene des Luftspalts von der Ständerseite aus gesehen.

Der Ständer ist aus drei Gruppen von jeweils in Bewegungsrichtung des Läufers hintereinander angeordneten U-förmigen weichmagnetischen Kernen 1 und jeweils dazwischenliegenden I-förmigen Kernen 2 aufgebaut. Jede der drei Gruppen ist einem Strang des Transversalflußmotors zugeordnet. Jeder Strang besitzt eine tangential angeordnete Ständerwicklung 3, wobei die Ständerwicklungen 3 der drei Stränge von um 120° elektrisch gegeneinander versetzten Strömen durchflossen werden.

Der Läufer besteht aus sechs weichmagnetischen Rückschlußringen 4, die den Flußpfad der weichmagnetischen Kerne des Ständers über den Luftspalt zwischen Ständer und Läufer schließen. Der Fluß wird dabei in tangentialer Richtung geführt. In den Rückschlußringen 4 sind Nuten ausgebildet, die sich jeweils für einen Strang der Maschine auf gleicher Hohe befinden, jedoch zwischen den Strängen um 120° bei der dargestellten dreiphasigen Maschine versetzt sind, wie dies aus Fig. 1b unterhalb der Linie A-A erkennbar ist. In diese Nuten ist ein elektrisch leitendes Material eingebracht, das durch eine geschickte Verschaltung zwischen den Nuten der einzelnen Stränge und durch Kurzschlußringe 6 an den Stirnseiten der Transversalflußmaschine so verbünden ist, daß durch Induktion in dem so gebildeten Käfig ein Drehstromsystem entsteht. Damit ergibt sich eine Asynchronmaschine mit Kurzschlußläufer.

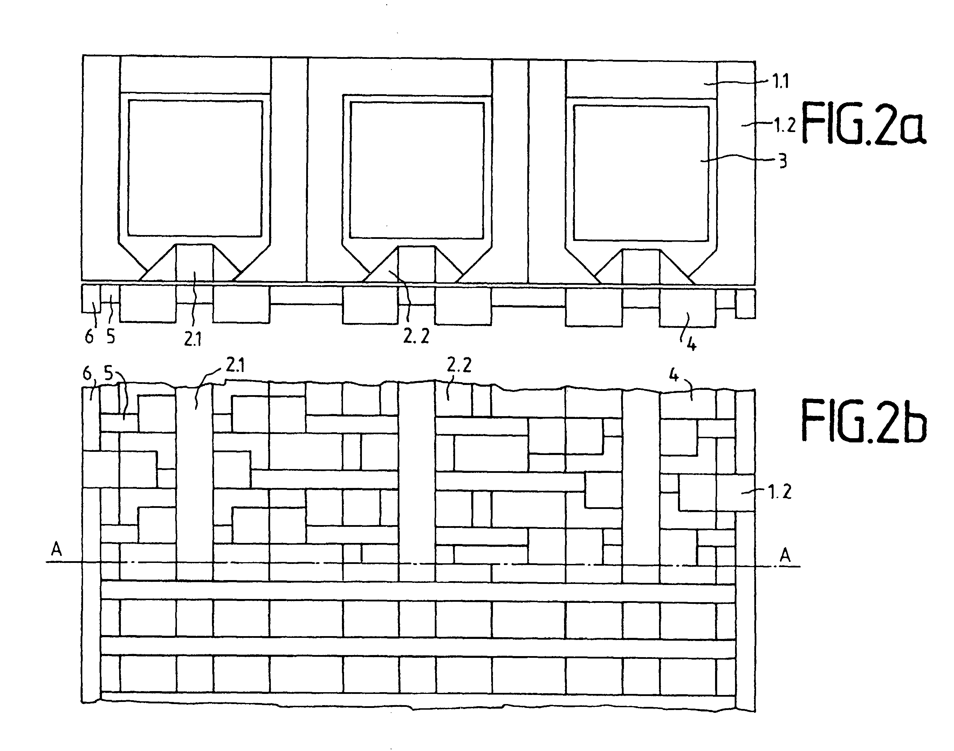

Bei dem zweiten Ausführungsbeispiel nach Fig. 2 sind anstelle der gegeneinander verschobenen Läuferpole die Ständerpple geometrisch gegeneinander verschoben, was den Aufbau des Läuferkäfigs deutlich vereinfacht. Auch in Fig. 2 zeigt Fig. 2a einen in Bewegungsrichtung des Läufers gesehenen senkrechten Schnitt durch den Transversalflußmotor und Fig. 2b zeigt einen horizontalen Schnitt, wobei der Bereich oberhalb der Linie A-A eine Ansicht von der Ständer-Außenseite auf die Maschine und Fig. 2b eine Ansicht direkt auf die Ebene des Luftspalts von der Ständerseite aus gesehen darstellen. Der Läufer besteht aus den sechs genuteten Rückschlußringen 4 und einem Käfig aus elektrisch leitendem Material, nämlich Stäben 5 und Kurzschlußringen 6. Im Ständer sind die Pole bzw. weichmagnetischen Kerne 1 in Bewegungsrichtung des Läufers gegeneinander versetzt. Die oberen, die Ständerwicklung 3 umschließenden Kerne des einer Wicklung zugeordneten Stranges sind,rechts und links der Ständerwicklung 3 geometrisch um je eine Polteilung versetzt. Die Stränge enthalten weiterhin einen alle o ren Kerne verbindenden Rückschluß 1.1 sowie Schenkel 1.2 aus weichmägnetischem Material. Die ebenfalls geometrisch um eine Polteilung gegeneinander versetzten unteren, die Ständerwicklung 3 nicht umschließenden Kerne sind in tangentialer Richtung zwischen den oberen Kernen angeordnet. Sie bestehen ebenfalls aus dem gemeinsamen Rückschluß 2.1 und den Schenkeln 2.2.

Bei dem zweiten Ausführungsbeispiel nach Fig. 2 sind die U-förmigen Kerne 1 im Ständer gekröpft ausgeführt. Dadurch können die einzelnen Stränge in axialer Richtung direkt aneinander gerückt werden, was die Baulänge verkürzt. Zur Verringerung der Streuung kann die Kröpfung so ausgebildet sein, daß die U-förmigen bzw. die I-förmigen Kerne jeweils nur einen Teil des Läufer-Rückschlusses bedecken.

Die gegenseitige Versetzung der Pole des Läufers und/oder Ständers kann beliebig groß gewählt werden . Wesentlich ist nur, daß im Zusammenwirken mit den durch die Ständerwicklungen fließenden Strömen ein Anlaufdrehmoment sowie auch ein möglichst hohes Drehmoment während des Laufes erhalten wird.

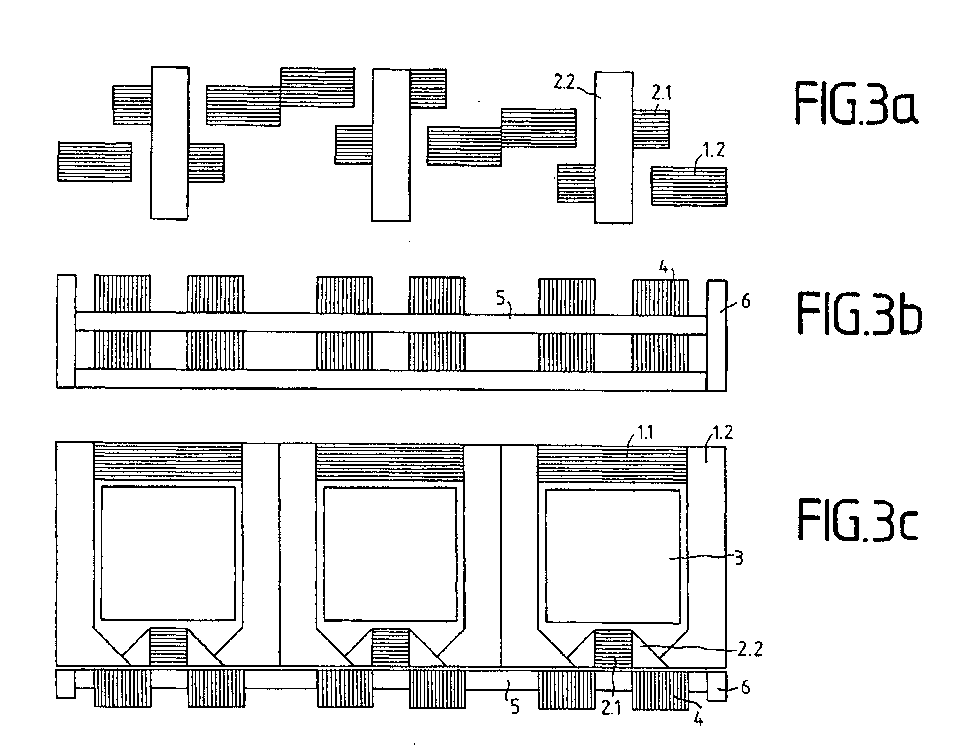

Der weichmagnetische Teil des Ständers wird vorzugsweise aus Elektroblech hergestellt, wobei zumindest die Schenkel der U-förmigen Kerne 1 und der I-förmigen Kerne 2 als tangential zur Läuferbewegung geschichtete Bleche ausgeführt werden. Bei dem Ausführungsbeispiel nach Fig. 2 ist es von Vorteil, den weichmagnetischen Teil des Ständers geteilt auszubilden. Dies ist in Fig. 3 illustriert. Fig. 3a zeigt die Ansicht vom Luftspalt auf die Ständerseite, Fig. 3b diejenige vom Luftspalt auf die Läuferseite. Fig. 3c ist eine Ansicht in Bewegungsrichtung des Läufers. Im Falle einer rotierenden Maschine werden Bleche in der Breite des Wicklungsfensters zu einem Ring für das obere Joch 1.1 des U-förmigen Kerns 1 gewickelt. Ein entsprechend dünnerer Ring 2.1 ist auch im Bereich der I-förmigen Kerne 2 notwendig. Die Schenkel der oberen und unteren Kerne bestehen aus tangential geschichteten Blechen. Im Läufer werden vorzugsweise in axialer Richtung geschichtete Bleche für die Rückschlußstäbe 4 verwendet, wobei diese Schichtung materialsparend durch senkrechtes Rollen erhalten werden kann.

## Patentansprüche

1. Mehrsträngige Transversalflußmaschine mit einem Ständer mit im wesentlichen U- und I-förmigen Kernen (1, 2) aus weichmagnetischem Material und jeweils einer in diesen einen Magnetfluß erzeugenden Ständerwicklung (3) für jeden Strang sowie einem Läufer mit magnetischem Rückschluß (4), wobei die Stränge des Ständers magnetisch voneinander getrennt sind,
**dadurch gekennzeichnet,**
**dass** der Läufer zur Ausbildung von Läuferpolen in jedem einem der Stränge zugeordneten Bereich elektrisch leitendes Material (5, 6) enthält und das elektrisch leitende Material (5, 6) mindestens zweier Stränge so in dem Läufer angeordnet und miteinander verbunden ist, daß bei durch die Ständerwicklungen (3) dieser Stränge fließendem Wechselstrom ein ein Anlaufdrehmoment für den Läufer erzeugender Strom in dem elektrisch leitenden Material induziert wird, wobei
- die elektrisch verbundenen Läuferpole der einzelnen Stränge in Bewegungsrichtung des Läufers geometrisch gegeneinander versetzt sind und /oder
- die den elektrisch verbundenen Läuferpolen der einzelnen Stränge zugeordneten Ständerpole in Bewegungsrichtung des Läufers geometrisch gegeneinander versetzt sind.

2. Transversalflussmaschine nach Anspruch 1 **dadurch gekennzeichnet, daß** die Ständerwicklungen (3) der einzelnen Stränge mit in der Phase gegeneinander verschobenen Strömen beaufschlagbar sind.

3. Transversalflußmaschine nach einem der Ansprüche 1 oder 2, **dadurch gekennzeichnet, daß** das im Läufer enthaltene elektrisch leitende Material einen Läuferkäfig (5) mit zwei stirnseitigen Kurzschlußringen (2) bildet.

4. Transversalflußmaschine nach einem der Ansprüche 1 bis 3, **dadurch gekennzeichnet, daß** sie mit einem gegenüber dem Läufer einseitigen Ständer ausgebildet ist.

5. Transversalflußmaschine nach einem der Ansprüche 1 bis 4, **dadurch gekennzeichnet, daß** sie mit einem gegenüber dem Läufer doppelseitigen Ständer ausgebildet ist.

6. Transversalflußmaschine nach einem der Ansprüche 1 bis 5, **dadurch gekennzeichnet, daß** das elektrisch leitende Material (5, 6) des Läufers mit einem Schleifring zur Zuführung einer elektrischen Leistung von außen verbunden ist.

7. Transversalflußmaschine nach einem der Ansprüche 1 bis 6, **dadurch gekennzeichnet, daß** der Läufer eine Drehbewegung ausführt.

8. Transversalflußmaschine nach einem der Ansprüche 1 bis 7, **dadurch gekennzeichnet, daß** der Läufer eine Linearbewegung ausführt.

9. Transversalflußmaschine nach einem der Ansprüche 1 bis 8, **dadurch gekennzeichnet, daß** die weichmagnetischen Kerne (1,2) des Ständers und der magnetische Rückschluß (4) des Läufers aus geschichteten Blechen bestehen.

## Claims

1. A multi-phase transverse flux machine, with a stator that has essentially U-shaped and I-shaped cores (1, 2) of a low-retentivity material, as well as one respective stator winding (3) for each phase in order to generate a magnetic flux in these cores, and with a runner that has a magnetic keeper (4), wherein the phases of the stator are magnetically separated from one another,
**characterized in that**
the runner contains electrically conductive material (5, 6) in each region that is assigned to one of the phases in order to form runner poles, and **in that** the electrically conductive material (5, 6) of at least two phases is arranged and interconnected in the runner in such a way that, if an alternating current flows through the stator windings (3) of these phases, a current which generates a starting torque for the runner is induced in the electrically conductive material, wherein
- the electrically connected runner poles of the individual phases are geometrically offset relative to one another in the moving direction of the runner and/or
- the stator poles assigned to the electrically connected runner poles of the individual phases are geometrically offset relative to one another in the moving direction of the runner.

2. The transverse flux machine according to Claim 1, **characterized in that** currents which are phase-shifted relative to one another are applicable to the stator windings (3) of the individual phases.

3. The transverse flux machine according to Claim 1 or 2, **characterized in that** the electrically conductive material contained in the runner forms a runner cage (5) with two short circuit rings (2) on the end faces.

4. The transverse flux machine according to one of Claims 1 to 3, **characterized in that** it is realized with a one-sided stator referred to the runner.

5. The transverse flux machine according to one of Claims 1 to 4, **characterized in that** it is realized with a double-sided stator referred to the runner.

6. The transverse flux machine according to one of Claims 1 to 5, **characterized in that** the electrically conductive material (5, 6) of the runner is connected to a slipring in order to externally supply electric power.

7. The transverse flux machine according to one of Claims 1 to 6, **characterized in that** the runner carries out a rotational movement.

8. The transverse flux machine according to one of Claims 1 to 7, **characterized in that** the runner carries out a linear movement.

9. The transverse flux machine according to one of Claims 1 to 8, **characterized in that** the low-retentivity cores (1, 2) of the stator and the magnetic keeper (4) of the rotor consist of laminated sheet plates.

## Revendications

1. Machine à flux transversal multi brins équipée d'un stator avec des noyaux (1, 2) sensiblement en forme de U et de I à base de matériau magnétique doux et un enroulement de stator (3) générant d'un flux magnétique dans ces noyaux pour chaque brin et un curseur avec un reflux magnétique (4), les brins du stator étant séparés les uns des autres au plan magnétique,
**caractérisée en ce que**
le rotor contient du matériau (5, 6) électriquement conducteur dans chaque zone attribuée à l'un des brins pour réaliser les pôles du curseur et le matériau (5, 6) électriquement conducteur d'au moins deux brins est disposé dans le curseur et est relié de telle sorte que, avec un courant alternatif circulant à travers les enroulements de stator (3) de ces brins, un courant générant un couple de démarrage pour le curseur est induit dans le matériau électriquement conducteur,
- les pôles de curseur électriquement reliés des différents brins étant décalés sur un plan géométrique les uns par rapport aux autres dans le sens de déplacement du rotor et/ou
- les pôles de stator attribués aux pôles de curseur électriquement reliés des différents brins étant décalés sur un plan géométrique les uns par rapport aux autres dans le sens de déplacement du curseur.

2. Machine à flux transversal selon la revendication 1, **caractérisée en ce que** les enroulements de stator (3) des différents brins peuvent être sollicités avec des courants déplacés les uns par rapport aux autres dans la phase.

3. Machine à flux transversal selon l'une quelconque de la revendication 1 ou 2, **caractérisée en ce que** le matériau électroconducteur contenu dans le curseur forme une cage de curseur (5) avec deux bagues de court-circuit (2) frontaux.

4. Machine à flux transversal selon l'une quelconque des revendications 1 à 3, **caractérisée en ce qu'**elle est conçue avec un stator unilatéral par rapport au curseur.

5. Machine à flux transversal selon l'une quelconque des revendications 1 à 4, **caractérisée en ce qu'**elle est conçue avec un stator bilatéral par rapport au curseur.

6. Machine à flux transversal selon l'une quelconque des revendications 1 à 5, **caractérisée en ce que** le matériau électroconducteur (5, 6) du curseur est relié à une bague de frottement pour l'arrivée d'une puissance électrique par l'extérieur.

7. Machine à flux transversal selon l'une quelconque des revendications 1 à 6, **caractérisée en ce que** le curseur exécute un mouvement de rotation.

8. Machine à flux transversal selon l'une quelconque des revendications 1 à 7, **caractérisée en ce que** le curseur exécute un mouvement linéaire.

9. Machine à flux transversal selon l'une quelconque des revendications 1 à 8, **caractérisée en ce que** les noyaux (1, 2) magnétiques doux du stator et le reflux (4) magnétique du curseur sont à base de tôles empilées.
